**Europäisches Patentamt**

**European Patent Office**

**Office européen des brevets**

(19)

(11) Veröffentlichungsnummer: **0 107 244**
**A1**

(12) # EUROPÄISCHE PATENTANMELDUNG

(21) Anmeldenummer: **83201464.1**

(22) Anmeldetag: **13.10.83**

(51) Int. Cl.³: **C 03 B 5/235,** F 28 D 17/04,
F 27 B 3/26, F 23 L 15/02

(30) Priorität: **25.10.82 AT 3918/82**

(43) Veröffentlichungstag der Anmeldung: **02.05.84**
**Patentblatt 84/18**

(84) Benannte Vertragsstaaten: **DE FR GB IT**

(71) Anmelder: **Veitscher
Magnesitwerke-Actien-Gesellschaft,
Schubertring 10-12, A-1010 Wien (AT)**

(72) Erfinder: **Horak, Josef, Dipl. Ing., Otto
Weininger-Gasse 6, A-1130 Wien (AT)**
Erfinder: **Triessnig, Alois, Dipl. Ing., Anschützgasse 17,
A-1150 Wien (AT)**
Erfinder: **Doblhoff-Dier, Andreas, Dipl. Ing., An den
langen Lüssen 9/3/2, A-1190 Wien (AT)**

(74) Vertreter: **Kliment, Peter, Dipl.-Ing.Mag.-iur. et al,
Singerstrasse 8, A-1010 Wien (AT)**

(54) **Regenerativ beheizter Ofen.**

(57) Ein regenerativ beheizter Ofen weist mit einem Gitterbesatz (2) aus feuerfesten Steinen versehene Kammern (3) auf, die an ihrem unteren Ende mit einem Kanal (1) zur Abfuhr der Verbrennungsgase bzw. zur Zufuhr von Frischluft und an ihrem oberen Ende über einen im wesentlichen horizontal verlaufenden Durchlaßkanal (5) mit dem Herdraum (6) des Ofens verbunden sind. Um eine weitgehend gleichmäßige Durchströmung der Gitterkammern (3) zu gewährleisten, ist zumindest in dem unterhalb des Gitterbesatzes (2) vorgesehenen Einlaufraum (4) der Kammer (3) und gegebenenfalls auch in dem oberhalb des Gitterbesatzes (2) vorgesehenen Einlaufraum (4') des Durchlaßkanals (5) mindestens ein Störkörper (7, 71, 72, 74, 7') angeordnet, dessen Prallfläche (8) in den Gasstrom hineinragt.

0107244

## Regenerativ beheizter Ofen

Die Erfindung bezieht sich auf einen regenerativ beheizten Ofen, der mit einem Gitterbesatz aus feuerfesten Steinen versehene Kammern aufweist, die an ihrem unteren Ende mit einem Kanal zur Abfuhr der Verbrennungsgase bzw. zur Zufuhr von Frischluft und an ihrem oberen Ende über einen im wesentlichen horizontal verlaufenden Durchlaßkanal mit dem Herdraum des Ofens verbunden sind und sich im wesentlichen vertikal erstrecken, wobei der Durchlaß oberhalb und der Kanal unterhalb des Gitterbesatzes in die zugeordnete Kammer münden.

Bei solchen Öfen ist aus Gründen eines guten Wärmeaustausches wünschenswert, wenn die Abgase und danach die Frischluft mit einer über den Querschnitt des Gitterbesatzes möglichst gleichmäßigen Geschwindigkeit durch die Kanäle des Gitterbesatzes strömen.

Dieses Ziel wird bei den bekannten derartigen Öfen nicht erreicht, da es aufgrund der Umlenkung des Gasstromes und der Querschnittsänderung zu sehr ungleichmäßigen Strömungsgeschwindigkeiten im Gitterbesatz kommt. So ist beim Einströmen von Frischluft die Strömungsgeschwindigkeit in dem vom Kanal entfernteren Bereich des Gitterbesatzes wesentlich höher als in dem der Mündung des Kanals näheren Bereich. Dies führt zu einer entsprechend schlechten Ausnutzung des Wärmeinhaltes der Abgase, da die im Bereich der höheren Strömungsgeschwindigkeit der Frischluft gelegenen Gittersteine entsprechend vorzeitig abkühlen, wogegen die mit nur geringer Geschwindigkeit durchströmten Gittersteine ihre gespeicherte Wärme nur zu einem geringen Teil abgeben können.

Aufgabe der Erfindung ist es, einen Ofen der eingangs genannten Art zu schaffen, bei dem eine weitgehend gleichmäßige Durchströmung der Gitterkammern gewährleistet ist, wobei bestehende Öfen ohne großen Aufwand umrüstbar sein sollen.

Erfindungsgemäß wird dies dadurch erreicht, daß zumindest in dem unterhalb des Gitterbesatzes vorgesehenen Einlaufraum der Kammer und gegebenenfalls auch in dem oberhalb des Gitterbesatzes vorgesehenen Einlaufraum des Durchlaßkanals mindestens ein Störkörper angeordnet ist, dessen Prallfläche in den Gasstrom hineinragt. Auf diese Weise läßt sich die Ausbildung eines größeren beständigen Wirbels im Bereich der in Richtung der in den Einlaufraum einströmenden Gase hinteren Begrenzung des Einlaufraumes, der zu einem Anstieg der Strömungsgeschwindigkeit im hinteren Bereich führt, weitgehend vermeiden. Dabei ist es besonders vorteilhaft, wenn die Prallfläche(n) des bzw. der Störkörper in dem an den Kanal bzw. den Durchlaßkanal angrenzenden Abschnitt des Einlaufraumes angeordnet sind. Dadurch kommt es zu einer frühzeitigen Umlenkung des eintretenden Gasstromes und damit zu einer Erhöhung der Strömungsgeschwindigkeit in dem bisher nur mit relativ geringer Geschwindigkeit durchströmten Bereich des Gitterbesatzes.

Wie sich bei Versuchen gezeigt hat, kommt es zu einem besonders günstigen Verlauf der Strömung, wenn der Abstand der Prallfläche(n) des bzw. der Störkörper von der kanalseitigen Begrenzung des Gitterbesatzes 1/5 bis 1/2 vorzugsweise 1/4 bis 2/5 der in Richtung des Kanals gemessenen Erstreckung des Gitterbesatzes angeordnet sind.

Besonders günstige Verteilung der Strömung ergibt sich, wenn die Prallfläche(n) im wesentlichen parallel zur Strömungsrichtung im Gitterbesatz verlaufen, wodurch eine besonders günstige Umlenkung der Strömung erzielbar ist. Als besonders günstig hat es sich bei Versuchen erwiesen, wenn die Prallfläche(n) des bzw. der Störkörper eine Größe von 45 - 100 % des Querschnitts der Mündung des Kanals in den Einlaufraum bzw. 15 - 50 % des senkrecht zum Kanal stehenden lichten Querschnittes des Einlaufraumes aufweisen.

Zu einer besonders weitgehenden Vergleichmäßigung der Strömung durch den Gitterbesatz kann weiters vorgesehen sein,

0107244

daß die Störkörper in Richtung des Kanals gestaffelt angeordnet sind, wobei es sich als besonders günstig erwiesen hat, wenn zwei an den in Richtung des Kanals verlaufenden Seitenwänden des Einlaufraumes anstehende Störkörper, deren einander gegenüberliegende Stirnseiten voneinander beabstandet sind, höher sind als ein in Richtung des Kanals zur Kammer hin gesehen, hinter dem zwischen den beiden seitlichen Störkörpern verbleibenden Spalt angeordneter Störkörper. Auf diese Weise wird eine weitgehende Vergleichmäßigung der Strömungsgeschwindigkeiten nicht nur in Richtung der in den Einlaufraum einströmenden Frischluft, sondern auch in Querrichtung erzielt.

Eine in dieser Hinsicht ebenfalls sehr günstige Lösung zeichnet sich dadurch aus, daß der Störkörper sich bogenförmig von Seitenwand zu Seitenwand erstreckt und im Bereich der in Richtung des Kanals verlaufenden Mittellinie des Einlaufraumes seinen größten Abstand vom kanalseitigen Ende des Gitterbesatzes aufweist, wobei vorzugsweise der Störkörper in seinem mittleren Bereich seine geringste Höhe aufweist.

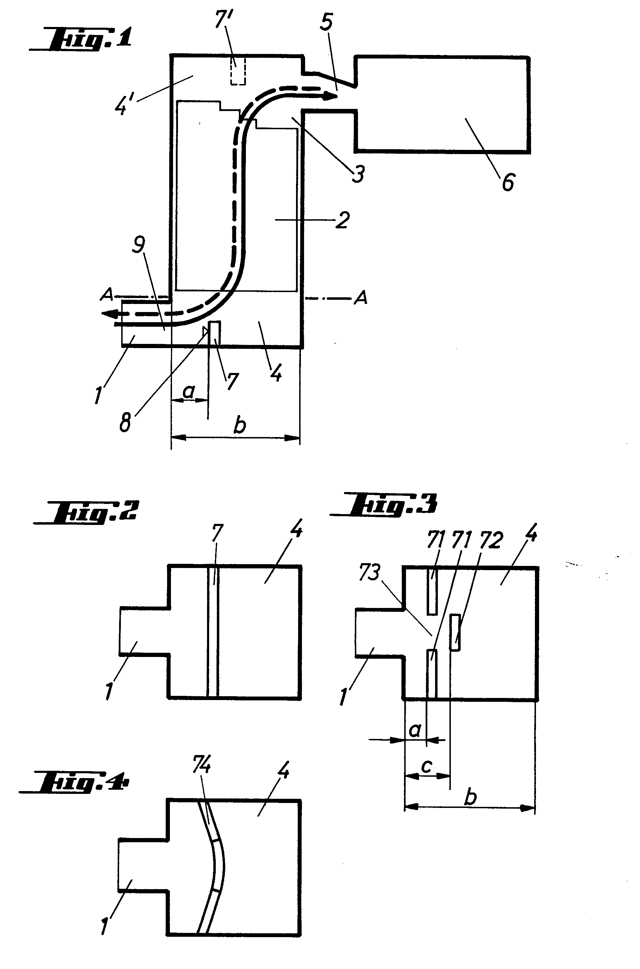

Die Erfindung wird nun an Hand der Zeichnung näher erläutert. Dabei zeigt: Fig. 1 schematisch einen Ofen gemäß der Erfindung und die Fig. 2 bis 4 schematisch Schnitte gemäß der Linie A-A in Fig. 1 durch verschiedene Ausführungsformen der Erfindung.

Wie aus Fig. 1 ersichtlich, mündet ein Kanal 1 im unteren Bereich einer mit einem Gitterbesatz 2 versehenen Kammer 3 in diese bzw. deren unteren Einlaufraum 4 ein. Der Gitterbesatz 2 endet an seinem oberen Ende stufig, doch ist dies nicht unbedingt erforderlich. Oberhalb des Gitterbesatzes 2 mündet in die Kammer 3 ein Durchlaßkanal 5 ein, der diese mit dem Herdraum 6 verbindet.

Über den Kanal 1 werden abwechselnd Frischluft zugeführt oder die Abgase des Herdraumes 6 abgezogen.

In dem unterhalb des Gitterbesatzes 2 liegenden Einlaufraum 4 der Kammer 3 ist ein Störkörper 7 angeordnet, dessen Prallfläche 8 parallel zur Strömungsrichtung im Gitterbesatz 2 verläuft.

Dieser Störkörper 7 lenkt den eintretenden Luftstrom 9 nach oben ab, wodurch die ohne einen solchen Störkörper im vom Kanal 1 entfernteren Bereich des Einlaufraumes 4 auftretende Wirbelbildung weitgehend verhindert wird, die zu einer sehr ungleichmäßigen Strömungsgeschwindigkeit der Luft durch den Gitterbesatz 2 führt. Außerdem bewirkt die Umlenkung des Luftstromes 9 durch den Störkörper 7 einen Anstieg der Strömungsgeschwindigkeit der Luft durch den Gitterbesatz in dem dem Kanal 1 nächstliegenden Bereich des Gitterbesatzes.

Der Abstand a der Prallfläche 8 des Störkörpers 7 von der dem Kanal 1 zugekehrten Seite des Gitterbesatzes 2 beträgt zwischen 1/5 und 1/2 der in Richtung des Kanals 1 gemessenen Erstreckung b des Gitterbesatzes 2.

In dem an den Durchlaßkanal 5 anschließenden oberen Einlaufraum 4' kann ebenfalls ein Störkörper 7' angeordnet sein. Ein solcher ist insbesondere dann von Vorteil, wenn dieser Einlaufraum 4' relativ klein bemessen ist.

Wie aus den Fig. 2 bis 4 ersichtlich, kann der Störkörper 7 verschieden ausgebildet sein. Im einfachsten Fall erstreckt sich der Störkörper 7 einfach von Seitenwand zu Seitenwand des Einlaufraumes 4, wobei es sich als vorteilhaft erweisen kann, im mittleren Bereich des Störkörpers 7 eine geringere Höhe als an den an die Seitenwände anschließenden Bereichen vorzusehen. Dabei kann der Übergang verlaufend oder auch stufenförmig erfolgen.

Bei Versuchen hat es sich als besonders günstig erwiesen, mehrere Störkörper 71, 72 vorzusehen, wobei zwischen den an die Seitenwände anschließenden Störkörpern 71 ein größerer Spalt 73 verbleibt. Hinter diesem Spalt ist ein weiterer Störkörper 72 angeordnet, der vorteilhafterweise eine geringere Höhe als die Störkörper 71 aufweist.

Der Abstand a der Störkörper 71 bzw. deren Prallflächen von der dem Kanal 1 zugekehrten Seite des Gitterbesatzes beträgt dabei etwa 1/5 bis 3/10 der in Richtung des Kanals 1 gemessenen Erstreckung b des Gitterbesatzes 2, wogegen der Abstand c der Prallfläche des Störkörpers 72 etwa

0107244

2/5 bis 1/2 des Maßes b beträgt.

Eine weitere sehr günstige Ausführungsform eines Störkörpers 74 zeigt Fig. 4, wobei der Störkörper 74 bogenförmig ausgebildet ist und seinen größten Abstand von der dem Kanal 1 zugekehrten Seite des Gitterbesatzes 2 in seinem mittleren Bereich aufweist, der zweckmäßigerweise eine geringere Höhe als seine Randbereiche aufweist.

PATENTANSPRÜCHE :

1.      Regenerativ beheizter Ofen, der mit einem Gitterbesatz aus feuerfesten Steinen versehene Kammern aufweist, die an ihrem unteren Ende mit einem Kanal zur Abfuhr der Verbrennungsgase bzw. zur Zufuhr von Frischluft und an ihrem oberen Ende über einen im wesentlichen horizontal verlaufenden Durchlaßkanal mit dem Herdraum des Ofens verbunden sind und sich im wesentlichen vertikal erstrecken, wobei der Durchlaß oberhalb und der Kanal unterhalb des Gitterbesatzes in die zugeordnete Kammer münden, dadurch gekennzeichnet, daß zumindest in dem unterhalb des Gitterbesatzes (2) vorgesehenen Einlaufraum (4) der Kammer (3) und gegebenenfalls auch in dem oberhalb des Gitterbesatzes vorgesehenen Einlaufraum (4') des Durchlaßkanals (5) mindestens ein Störkörper (7, 71, 72, 74, 7') angeordnet ist, dessen Prallfläche (8) in den Gasstrom hineinragt.

2.      Ofen nach Anspruch 1, dadurch gekennzeichnet, daß die Prallfläche(n) (8) des bzw. der Störkörper (7, 71, 72, 74, 7') in dem an dem Kanal (1) bzw. den Durchlaßkanal (5) angrenzenden Abschnitt des Einlaufraumes (4, 4') angeordnet sind.

3.   ·      Ofen nach Anspruch 2, dadurch gekennzeichnet, daß der Abstand der Prallfläche(n) (8) des bzw. der Störkörper von der kanalseitigen Begrenzung des Gitterbesatzes (2) 1/5 bis 1/2 vorzugsweise 1/4 bis 2/5 der in Richtung des Kanals (1, 5) gemessenen Erstreckung des Gitterbesatzes angeordnet sind.

4.      Ofen nach einem der Ansprüche 1 bis 3, dadurch gekennzeichnet, daß die Prallfläche(n) (8) im wesentlichen parallel zur Strömungsrichtung im Gitterbesatz (2) verlaufen.

5.      Ofen nach einem der Ansprüche 1 bis 4, dadurch gekennzeichnet, daß die Prallfläche(n) (8) des bzw. der Störkörper (7, 71, 72, 74, 7') eine Größe von 45 - 100 % des Querschnitts der Mündung des Kanals (1, 5) in den Einlaufraum (4, 4') bzw. 15 - 50 % des senkrecht zum Kanal (1, 5) stehenden lichten Querschnitts des Einlaufraumes (4, 4') aufweisen.

6. Ofen nach einem der Ansprüche 1 bis 5, dadurch gekennzeichnet, daß die Störkörper (7, 71, 72, 74, 7') in Richtung des Kanals (1, 5) gestaffelt angeordnet sind.

7. Ofen nach Anspruch 6, dadurch gekennzeichnet, daß zwei an den in Richtung des Kanals (1, 5) verlaufenden Seitenwänden des Einlaufraumes (4, 4') anstehende Störkörper (71), deren einander gegenüberliegende Stirnseiten voneinander beabstandet sind, höher sind als ein in Richtung des Kanals (1, 5) zur Kammer (3) hin gesehen, hinter dem zwischen den beiden seitlichen Störkörpern (71) verbleibenden Spalt (73) angeordneter Störkörper (72).

8. Ofen nach einem der Ansprüche 1 bis 5, dadurch gekennzeichnet, daß der Störkörper (74) sich bogenförmig von Seitenwand zu Seitenwand erstreckt und im Bereich der in Richtung des Kanals (1, 5) verlaufenden Mittellinie des Einlaufraumes (4, 4') seinen größten Abstand vom kanalseitigen Ende des Gitterbesatzes (2) aufweist.

9. Ofen nach Anspruch 8, dadurch gekennzeichnet, daß der Störkörper (74) in seinem mittleren Bereich seine geringste Höhe aufweist.

1/1

**Fig.1**

**Fig.2**

**Fig.3**

**Fig.4**

**Europäisches Patentamt**

# EUROPÄISCHER RECHERCHENBERICHT

EP 83 20 1464

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 047 560 (YIH-WAN TSAI) <br> * Figuren 4,7; Spalten 4,5; Ansprüche 1-6 * | 1-5 | C 03 B 5/235 <br> F 28 D 17/04 <br> F 27 B 3/26 <br> F 23 L 15/02 |
| X | US-A-4 088 180 (YIH-WAN TSAI) <br> * Figuren 4,7; Spalten 4,5 * | 1-5 | |
| X | US-A-2 813 708 (FREY) <br> * Insgesamt * | 1,2,4 | |
| A | US-A-4 257 476 (YIH-WAN TSAI) <br> * Insgesamt * | 1 | |
| A | FR-A-2 217 654 (LAIDLAW DREW) <br> * Insgesamt * | 1 | |
| | ----- | | **RECHERCHIERTE SACHGEBIETE (Int. Cl. ³)** |
| | | | C 03 B <br> F 28 D <br> F 27 B <br> F 23 L |

Der vorliegende Recherchenbericht wurde für alle Patentansprüche erstellt.

| Recherchenort <br> DEN HAAG | Abschlußdatum der Recherche <br> 16-01-1984 | Prüfer <br> VAN DEN BOSSCHE W.L. |
|---|---|---|